# EUROPEAN PATENT SPECIFICATION

(11) **EP 1 383 989 B1**
(45) Date of publication and mention of the grant of the patent: **09.11.2005**
(21) Application number: 01929039.4
(22) Date of filing: 02.04.2001
(51) Int. Cl.: F01N 1/24, F01N 1/08, F01N 1/10, F01N 7/00

(54) **PNEUMATIC HAND TOOL EXHAUST MUFFLER HAVING INNER AND OUTER TUBES**
ABGAS-SCHALLDÄMPFER MIT INNEREN UND ÄUSSEREN ROHREN FÜR DRUCKLUFTHANDWERKZEUG
SILENCIEUX D'ECHAPPEMENT POUR OUTIL A MAIN PNEUMATIQUE COMPRENANT UN TUBE INTERNE ET UN TUBE EXTERNE

(43) Date of publication of application: 28.01.2004
(73) Proprietor: Exhaust Technologies, Inc, Spokane, Washington 99202-1608 (US)
(72) Inventor: Sterling, Robert, E., Colbert, WA 99005 (US)
(74) Representative: Tranter, Andrew David
(86) International application number: PCT/US2001/040420
(87) International publication number: WO 2002/084084

(56) References cited:
- EP-A- 0 084 598
- EP-A- 0 127 550
- FR-A- 1 519 853
- GB-A- 1 432 048
- US-A- 3 842 932
- US-A- 4 033 428
- US-A- 4 367 807
- US-A- 5 500 494
- US-A- 5 767 459
- US-A- 5 952 623

## Description

### Cross-Reference to Related Applications

This application is a continuation-in-part of U.S. Application. Serial 09/431,294 filed. October 29, 1999, which is a continuation-in-part of U.S. Application Serial No. 09/316,451 filed May 21, 1999, which is a continuation of U.S. Patent No. 5,909,016 filed May 1998, which was a continuation-in-part of U.S. Patent No. 5,952,623 filed January 13, 1998, priority from the filing date of which hereby claimed under 35 U.S.C. § 120.

### Filed of the Invention

The present invention relates to acoustics and sound modifying means for muffling and filtering air, and more particularly to devices for muffling and filtering air exhausted from pneumatically-operated hand tools, equipment, machines, and the like.

### Background of the Invention

Pneumatic hand tools are commonly used in industrial and residential settings. Various types of pneumatic hand tools are available, including ratchets, drills, wrenches, grinders, sanders, etc. Known hand tools typically include a handle having a hollow internal chamber. The chamber includes an air intake passage and an air exhaust passage. Each passage extends between a motor and an opening in the bottom surface of the handle. The portion of the intake passage located near its respective handle opening includes components adapted to connect to a standard air coupler or the like. The coupler is in communication with a pressured air supply source. The exhaust passage opens to the atmosphere. When exhaust air is vented from the hand tool, a considerable amount of noise and particulate debris is generated, potentially causing auditory and/or respiratory damage to the operator and others located nearby.

Although ear plugs and face masks are available to workers, they are often not used for a number of reasons-most typically because they are not convenient. Numerous attempts have been made by hand tool manufacturers, therefore, to reduce the amount of noise and particles generated by the hand tool itself. These attempts include designing quieter and cleaner motors and designing hand tool components that suppress noise and trap waste prior to expulsion from the hand tool. For example, U.S. Patent No. 5,418,339 describes a pneumatic hand tool having an exhaust port filled with a web of non-woven fibers coated with a binder resin. These types of mufflers have had some success in muffling sound, but there is often an increase in back pressure to the motor causing a decrease in the operating efficiency of the hand tool. The operating efficiency of a tool is typically measured in the operating speed of the motor in revolutions per minute (rpm) at a certain gauge pressure.

Cylindrical canister-type combination muffler and air filters are known for large machines, such as hoists and presses. For example, U.S. Patent No. 4,134,472 describes a combination muffler and air filter having a central tubular member with a number of slots. The tubular member is surrounded by a disposable canister having inner and outer perforated rigid cylinders encasing a series of stacked annular filter members. Exhaust air passes through the inner cylinder, into the filters, and out the outer cylinder. These devices are not typically used for hand tools, however, because of they are large, heavy, and difficult to maneuver.

Thus, there exists a need for a noise muffling system that can reduce sound levels and remove entrained solid and liquid contaminates from the exhausted air before it is discharged to the atmosphere. The ideal device would effectively muffle and filter the exhaust air without creating substantial amounts of back pressure. This would allow a hand tool to be operated without jeopardizing performance of the pneumatic tool over long periods of usage. The ideal muffling system would further attach to a hand tool body and remain attached even during significant tool vibrations. In addition, it would be desirable to have a muffler that can be easily attached to existing pneumatic hand tools. The present invention is directed to fulfilling these needs and others as described below.

### Summary of the Invention

In a first aspect of the invention there is provided a pneumatic hand tool having a handle with an exhaust passage for receiving exhaust air, the exhaust passage including a main section having a wall surface, the muffler comprising:
(a) an inner tube having an open proximal end and a distal end, the inner tube including at least one opening in addition to its open proximal end:
(b) an outer tube positioned about the inner tube and including at least one airflow opening, the outer tube being located within the exhaust passage main section and sized to define a passageway between the outer tube and the main section wall surface;
(c) a blocking element located near the inner tube proximal end; the blocking element blocking a portion of the exhaust passage main section such that a majority of the exhaust air is directed into the inner tube proximal end during use;
(d) an end cap attachable to the handle for closing the exhaust passage, the end cap having an exit opening; and
(e) a number of dividers extending outwardly from the inner tube toward the outward tube;

Wherein during use, exhaust air enters the inner tube proximal end, flows out the inner tube at least one opening, flows out the outer tube at least one airflow opening, passes through the passageway between the outer tube and the wall surfaces of the main section, and flows out the exit opening in the end cap.

### Brief description of the Drawings

The foregoing aspects and many of the attendant advantages of this invention will become more readily appreciated as the same becomes better understood by reference to the following detailed description, when taken in conjunction with the accompanying drawings, wherein:
**Figure 1** is a partial cross-sectional side view of a first embodiment muffler formed in accordance with the present invention;
**Figure 2** is a partial cross-sectional side view of a second embodiment of a muffler formed in accordance with the present invention;
**Figure 3** is a partial cross-sectional side view of muffler components used in the embodiment of Figure 2;
**Figure 4** is a perspective view of the outer tube of Figure 2;
**Figure 5** is a perspective view of the inner tube of Figure 2;
**Figure 6** is a perspective view of the end cap of Figure 2;
**Figure 7** is a partial cross-sectional side view of a third embodiment of a muffler formed in accordance with the present invention;
**Figure 8** is a side view of the muffler of Figure 7;
**Figure 9** is a perspective view of the outer tube of Figure 7;
**Figures 10, 11 and 12** are perspective views of alternative embodiments of an inner tube formed in accordance with the present invention;
**Figure 13** is a side view of a further embodiment of a muffler formed in accordance with present invention;
**Figure 14** is a perspective view of the outer tube of Figure 13, and
**Figure 15** is a perspective view of the inner tube of Figure 13.

### Detailed Description of the Preferred Embodiment

The present invention is a muffler for use in quieting exhaust expelled from a pneumatic hand tool. The present invention is compact, lightweight, and easy to use. In select embodiment, the muffler is adapted for immediate connection to known pneumatic hand tools, with only minimal changes required to the hand tool. A number of embodiments of the present invention are described below with reference to the accompanying drawings. It should be appreciated that these embodiments are provided to illustrate various features of the present invention, and thus should not be viewed as limiting with regard to the specific combination of their components.

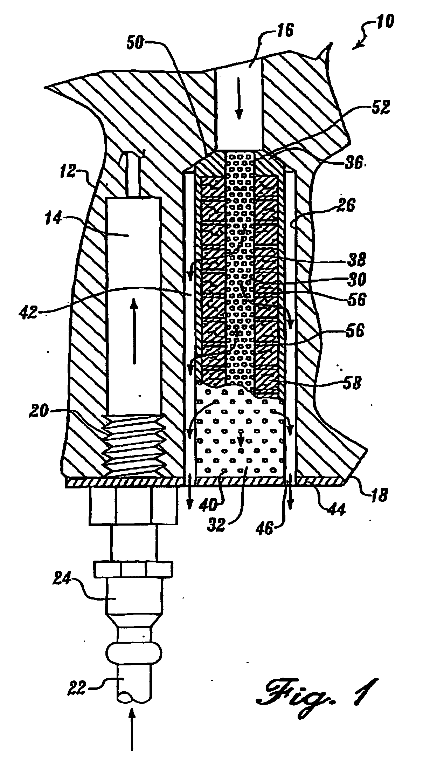

Referring to Figure 1, a pneumatic hand tool 10 generally includes a handle 12 within which an air intake passage 14 and an air exhaust passage 16 extend into end at respective openings in a bottom surface 18 of the handle. The opening of the air intake passage 14 includes threads 20 adapted to connect to an air supply line 22 via a standard air coupler 24 or the like. The supply line 22 is in communication with a pressured air supply source (not shown.) The exhaust passage includes a main section 26. The present invention muffler is received by the main section and is held therein using any one of a number of means, depending on the handle configuration of the tool.

Referring to Figure 1, a muffler formed in accordance with the present invention includes an inner tube 30 and an outer tube 32, the combination being positioned within the exhaust passage main section. The inner tube 30 includes an upper or proximal, end that is open to receive exhaust air from the exhaust passage. The inner tube is preferably formed of a rigid material such as a hard elastomer, metal, fiber, or cloth. An upper plate 36 helps direct exhaust air into the inner tube upper end. As used herein, the term "proximal" refers to a direction closer to the exhaust source. The term "distal" refers to a direction farther from the exhaust source.

The inner tube 30 further includes at least one other opening 38, and preferably, plural other openings. The additional opening 38 allows exhaust air to flow out of the inner tube. The outer tube 32 also includes at least one airflow opening 40. Depending on the pressure configuration of a particular hand tool, greater or fewer openings may be used in the tubes to help regulate the volume and speed of exiting exhaust air. The outer tube 32 is sized to provide a passageway 42 between itself and the wall surfaces of the main section. An end cap 44 is attachable to the handle for closing off the exhaust passage. The end cap 44 includes one or more exit openings 46 that release to atmosphere.

During use, exhaust air enters the inner tube proximal end, flows out the inner tube at least one opening, flows out the outer tube at least one airflow opening, passes through the passageway between the outer tube and the wall surfaces of the main section, and flows out the exit opening in the end cap. The tortuous path slows the exhaust air and assists in dampening exhaust noise.

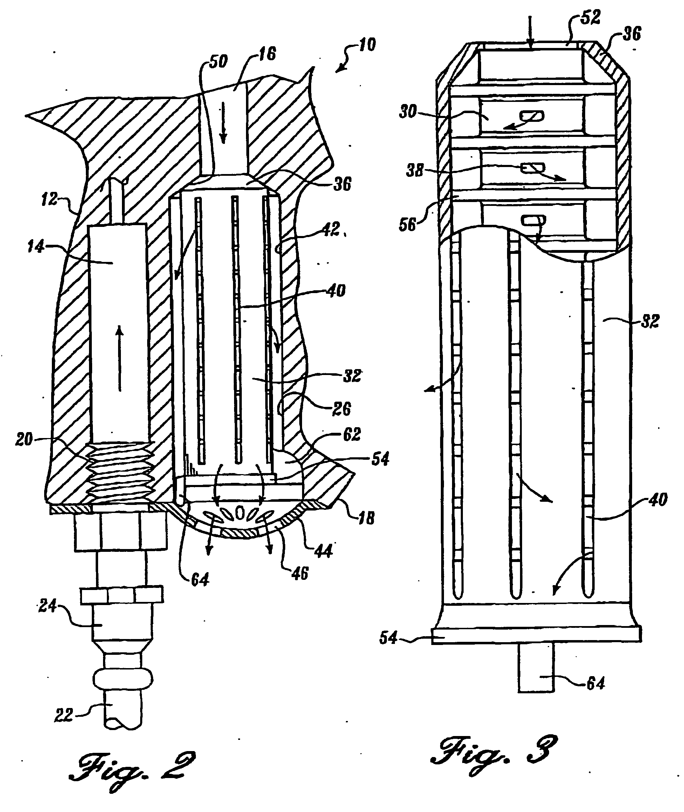

Referring to the embodiments of Figures 1 and 2, the upper plate 36 is integrally formed with the proximal end to the outer tube and rests against a shoulder 50 formed in the exhaust passage main section. The upper plate 36 includes a central channel 52 that aligns with the inner tube proximal end. The upper plate 36 closes off the outer tube proximal end altogether. In the arrangements of Figures 1 and2, the distal end of the inner tube end is closed. This forces exhaust air to exit the inner tube 30 laterally. In Figure 1, the distal end of the inner tube 30 is closed by the end cap 44, with the exit openings 46 positioned outward of the outer tube 32. In Figure 2, the distal ends of the inner tube 30 and outer tube 32 are closed by a separate closing cap 54.

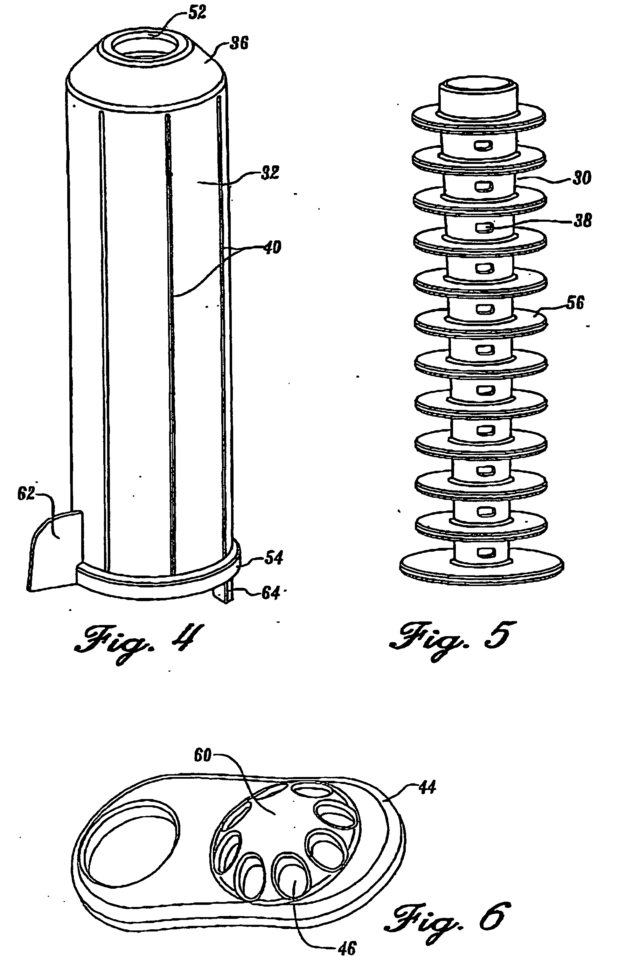

In the embodiments of Figure 5, the inner tube 30 has non-uniform diameter, particularly, a shape tapered smaller in the direction of the inner tube distal end. A number of dividers 56 are positioned along the inner tube 30, with each divider extending outwardly from the inner tube exterior surface toward the outer tube inner surface. In Figure 1, the dividers are separate components from the inner tube itself. In Figure 3 and 5, the dividers are integrally formed with the inner tube 30. Optional washers 58 may be positioned in the spaces between the inner and out tubes. The washer may be formed from a known material, such s felt, gauze, rubber, foam, or synthetic material. In one embodiment, the dividers extend fully between the inner tube 30 and the outer tube 32 to force exhaust air to travel laterally through each washer 58 and not vertically between washers.

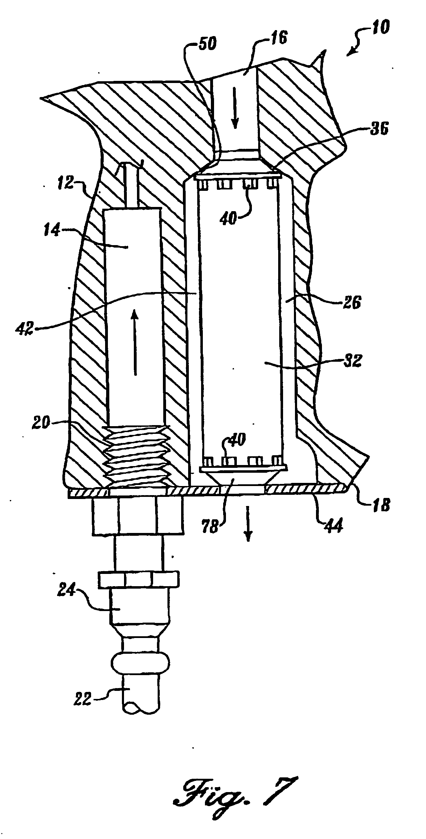

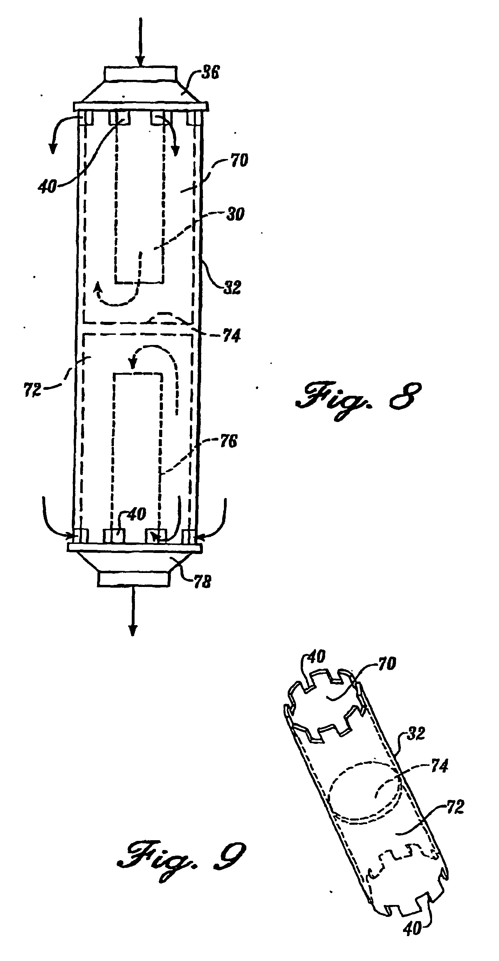

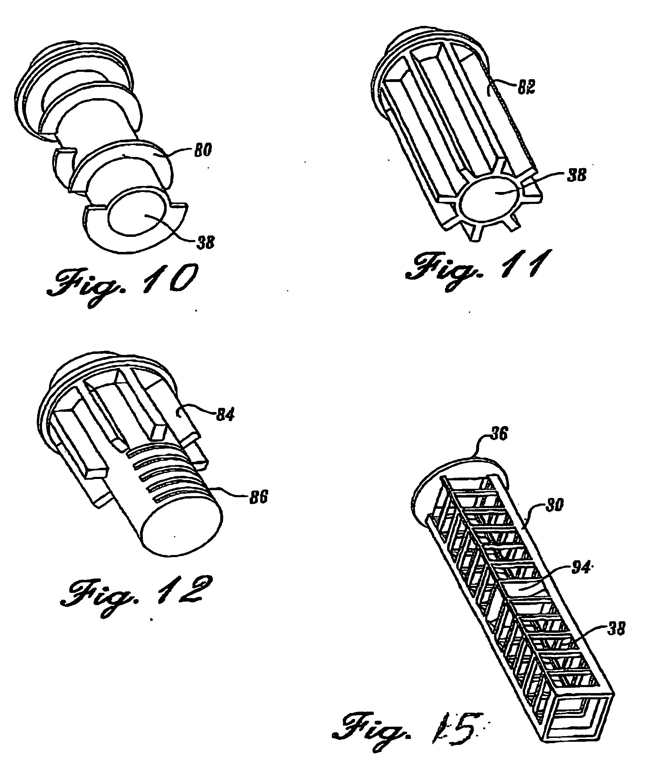

In the embodiment of Figure 2, the end cap 44 attaches to the handle for closing off the exhaust passage. The end cap 44 includes a bulbous surface 60 having a number of exit openings 46. See also Figure 6. Referring back to figure 4, the outer tube 32 includes a longitudinal fin 62 and extension member 64 near the outer tube distal end. When the muffler is inserted into the exhaust passage main section, the fin inserts into a corresponding slot formed in the handle. The inserted fin keeps the muffler from rotating. Likewise, the extension member contacts the end cap 44 to keep the muffler from translating.

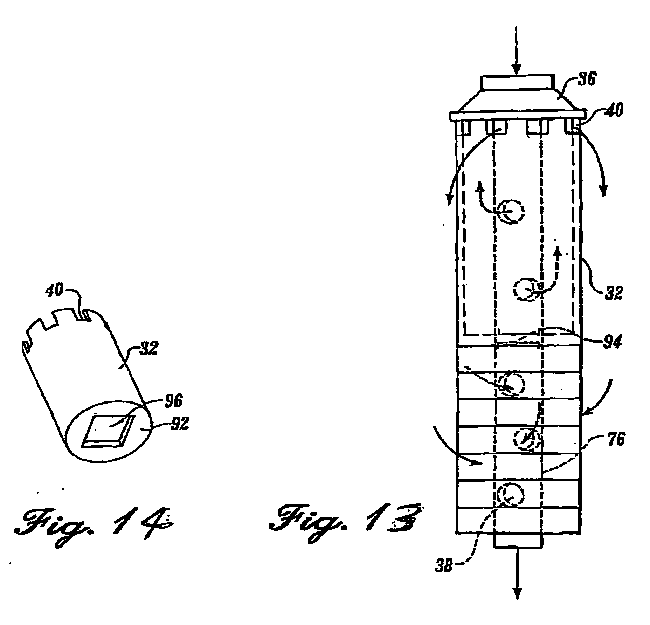

In the embodiments of Figures 1 and 2. the muffler accepts air in the inner tube 30 and forces the air to flow "outward" in order to discharge from the muffler. The embodiments of Figures 7. 8 and 18 additionally require exhaust air to flow back "inward" into an inner tube in order to discharge from the muffler.

Referring to Figures 7, 8 and 9, third embodiments of a muffler formed in accordance with the present invention is shown having an outer tube 32 that includes two compartments. A first compartment 70 is located above a second compartment 72, with a solid blocking plate 74 located between them. See also Figure 9. The ends of the outer tube 32 are open, and a number of airflow openings 40 are provided in the side walls of both compartments. The airflow openings 40 shown are formed as scalloped edges at the proximal and distal outer tube ends. The first and second compartments 70, 72 of the outer tube are approximately the same size. This may vary depending on the particular application and hand tool involved. For example, the first compartment 70 may be approximately one-third the total size, with the second compartment 72 being two-thirds.

A separate, second inner tube 76 is provided and located in the outer tube second compartment 72. The second inner tube 76 includes an open distal end and at least one other opening 38. In this regard, the first and second inner tubes 30, 76 are similar in function, but reversed in orientation. In Figure 7, the first inner tube 30 is formed integrally with the upper plate 36 and closes off the proximal end of the outer tube first compartment 70. The second inner tube 76 is formed integrally with a lower plate 78 and closes off the distal end of the outer tube second compartment 72. The exit opening 46 of the end cap 44 is located adjacent the lower plate and the open distal end of the second inner tube 76. Alternatively, an end cap 44 may be provided that functions as a lower plate instead.

The muffler embodiment of Figure 7 is assembled by inserting the first inner tube 30 down into the outer tube first compartment 70; inserting the second inner tube 76 up into the outer tube second compartment 72; inserting the combination into the exhaust handle; and attaching the end cap 44 to the handle. During use, after the exhaust air passes into the passageway 42 between the outer tube 32 and the wall surfaces of the main section, the exhaust air flows into the airflow openings 40 of the second compartment 72, into the openings of the second inner tube 76, out the open distal end of the second inner tube 76, and out the exit opening 46 in the end cap 44.

Figures 10-12 illustrate various inner tube configurations. In general, the additional opening in the inner tube may be located in the inner tube distal end, along inner tube side walls, or both. The arrangements of Figures 10 and 11 include a single opening provided in the inner tube distal end. Figure 10 further includes a number of lateral baffles 80 placed on exterior side surfaces. Figure 11 has a number of longitudinal flutes 82. Various other fins, or the like, may be used to direct air in a particular manner. In the arrangements of Figures 12-15, the distal end is closed and openings are provided along inner tube side walls. Figure 12 includes longitudinal half flutes 84 and lateral slots 86.

Referring to Figures 13, 14 and 15 further embodiment of a muffler formed in accordance with the present invention is provided. This embodiment is similar to the fourth embodiment, except the first and second inner tubes are integrally formed as one elongated inner tube 30. A cutoff wall 94 is located between the first and second inner tubes so as to prohibit exhaust air flow therethrough. The outer tube 32 includes a bottom opening 96 in its lower surface. See Figure 14. As assembled, the inner tube 30 extends through the bottom opening. The cutoff wall is coplanar with the outer tube lower surface. The size of the inner tube and the bottom opening are matched so that exhaust air is prohibited from flowing directly out the bottom opening of the outer tube.

As will be appreciated form a reading of the above, a number of variations are possible using the teachings herein. For example, the outer tube of Figure 7 may be modified with an opening in its cutoff wall to mate with the elongate inner tube of Figure 15. Important to the present invention is the object of slowing exhaust air as it exits the hand tool by forcing the exhaust air through various twist and turns. Also important is providing a combination of components sufficient for filtering and noise dampening without undue disruption of efficient tool operation, and particularly without undesirable levels of backpressure.

While the preferred embodiment of the invention has been illustrated and described, it will be appreciated that various changes can be made therein invention. For example, relief openings (not shown) may be used in the blocking plates and/or cutoff walls to relieve unexpected or sudden pressure surges. By way of further example, many different sizes, shapes, and placements of openings that may be used with the various components. In addition, the cross-sectional shape of the inner and outer tubes may be of any shape.

## Claims

1. A muffler for a pneumatic hand tool (10) having a handle (12) with an exhaust passage (16) for receiving exhaust air, the exhaust passage including a main section having a wall surface, the muffler comprising:
(a) an inner tube (30) having an open proximal end and a distal end, the inner tube including at least one opening (38) in addition to its open proximal end;
(b) an outer tube (32) positioned about the inner tube and including at least one airflow opening (40), the outer tube being located within the exhaust passage main section and sized to define a passageway between the outer tube and the main section wall surface;
(c) a blocking element (36) located near the inner tube proximal end; the blocking element blocking a portion of the exhaust passage main section such that a majority of the exhaust air is directed into the inner tube proximal end during use;
(d) an end cap (44) attachable to the handle for closing the exhaust passage, the end cap having an exit opening (46); and
(e) a number of dividers (56, 80, 82, 84, 92) extending outwardly from the inner tube toward the outer tube;
wherein during use, exhaust air enters the inner tube (30) proximal end, flows out the inner tube (30) at least one opening (38), flows out the outer tube (32) at least one airflow opening (40), passes through the passageway between the outer tube (32) and the wall surfaces of the main section, and flows out the exit opening (46) in the end cap (44).

2. The muffler according to Claim 1, wherein the inner tube (30) is formed of at least one of a hard elastomer, metal, fiber material and rigid cloth.

3. The muffler according to Claims 1 or 2, wherein the main section includes an upper shoulder (50), an upper plate (36) being formed to contact the upper shoulder (50) to force the exhaust air into the inner tube (30) proximal end during use.

4. The muffler according to any preceding claim, further comprising a number of washers (58) positioned about the inner tube.

5. The muffler according to Claim 4, wherein the number of washers (58) are formed from a material in the group comprising felt, gauze, rubber, foam, and synthetic material.

6. The muffler according to any preceding claim, further comprising a plurality of washers (58) positioned about the inner tube between the dividers.

7. The muffler according to any preceding claim, further comprising a second inner tube (76) located below the first inner tube (30); the second inner tube (76) having an open distal end and a proximal end; the second inner tube (76) including at least one opening in addition to its open distal end; the exit opening (46) of the end cap (44) located adjacent the open distal end; wherein during use, after the exhaust air passes into the passageway between the outer tube (32) and the wall surfaces of the main section, at least a portion of the exhaust air flows into the at least one opening of the second inner tube (76), out the open distal end of the second inner tube (76), and out the end cap exit opening (46).

8. The muffler according to Claim 7, further comprising a number of washers (58) positioned about the second inner tube.

9. The muffler according to Claim 8, wherein the number of washers (58) are formed from a material in the group comprising felt, gauze, rubber, foam, and synthetic material.

## Patentansprüche

1. Schalldämpfer für ein Drucklufthandwerkzeug (10) mit einem Griffstück (12) mit einem Abluftkanal (16) zum Aufnehmen der Abluft, wobei der Abluftkanal einen Hauptbereich mit einer Wandfläche umfasst, weist der Schalldämpfer folgendes auf:
(a) ein Innenrohr (30) mit einem offenen proximalen Ende und einem distalen Ende, wobei das Innenrohr mindestens eine Öffnung (31) zusätzlich zu seinem offenen proximalen Ende aufweist;
(b) ein Außenrohr (32), das um das Innrohr herum positioniert ist und mindestens eine Luftstromöffnung (40) umfasst, wobei das Außenrohr innerhalb des Abluftkanal-Hauptbereichs angeordnet und in der Größe festgelegt ist, um einen Durchgang zwischen dem Außenrohr und der Hauptbereichs-Wandfläche zu definieren;
(c) ein Blockierelement (36), das nahe des proximalen Innenrahrendes angeordnet ist, wobei das Blockierelement einen Bereich des Abluftkanal-Hauptbereichs blockiert, so dass eine Mehrheit der Abluft in das proximale Innenrohrende während der Anwendung gerichtet ist;
(d) eine Abschlusskappe (44), die am Griffstück zum Verschließen des Abluftkanals befestigbar ist, wobei die Abschlusskappe eine Austrittsöffnung (46) aufweist; und
(e) mehrere Teiler (56, 80, 82, 84, 92), die sich vom Innenrohr nach außen in Richtung des Außenrohrs erstrecken;
wobei während der Anwendung Abluft in das proximale Ende des Innenrohrs (30) eintritt, aus dem Innenrohr (30) an mindestens einer Öffnung (38) ausströmt, aus dem Außenrohr (32) an mindestens einer Luftstromöffnung (40) ausströmt, durch den Durchgang zwischen dem Außenrohr (32) und den Wandflächen des Hauptbereichs hindurchgeht und aus der Austrittsöffnung (46) in die Abschlusskappe (44) strömt.

2. Schalldämpfer gemäß Anspruch 1, wobei das Innenrohr (30) aus mindestens einem, entweder harten Elastomer, Metall, Fasermaterial oder steifen Gewebe, gebildet ist.

3. Schalldämpfer gemäß Anspruch 1 oder 2, wobei der Hauptbereich einen oberen Absatz (50) aufweist, wobei eine obere Platte (36) gebildet ist, um mit dem oberen Absatz (50) in Kontakt zu stehen, um die Abluft in das proximale Ende des Innrohrs (30) während der Anwendung zu drücken.

4. Schalldämpfer gemäß einem der vorhergehenden Ansprüche, der ferner eine Anzahl von Scheiben (58), die um das Innenrohr herum positioniert sind, aufweist.

5. Schalldämpfer gemäß Anspruch 4, wobei die Anzahl von Scheiben (58) aus einem Material aus der Gruppe gebildet ist, die Filz, Gaze, Gummi, Schaumstoff und Kunststoff umfasst.

6. Schalldämpfer gemäß einem der vorhergehenden Ansprüche, der ferner eine Mehrzahl von Scheiben (58) aufweist, die um das Innenrohr herum zwischen den Teilern positioniert sind.

7. Schalldämpfer gemäß einem der vorhergehenden Ansprüche, der ferner ein zweites Innenrohr (76) aufweist, das unter dem ersten Innenrohr (30) angeordnet ist; wobei das zweite Innenrohr (76) ein offenes distales Ende und ein proximales Ende aufweist; wobei das zweite Innenrohr (76) mindestens eine Öffnung zusätzlich zu seinem offenen distalen Ende aufweist; wobei die Austrittsöffnung (46) der Abschlusskappe (44) benachbart zum offenen distalen Ende angeordnet ist; wobei während der Anwendung, nach dem die Abluft in den Durchgang zwischen dem Außenrohr (32) und den wandflächen des Hauptbereichs hindurchgeht, mindestens ein Teil der Abluft in mindestens eine Öffnung des zweiten Innenrohrs (76) strömt, aus dem offenen distalen Ende des zweiten Innenrohres (76) und aus der verschlusskappen-Austrittsöffnung (46) ausströmt.

8. Schalldämpfer gemäß Anspruch 7, der ferner eine Anzahl von Scheiben (58) aufweist, die um das zweite Innenrohr herum positioniert sind.

9. Schalldämpfer gemäß Anspruch 8, wobei die Anzahl von Scheiben (58) aus einem Material aus der Gruppe gebildet ist, die Filz, Gaze, Gummi, Schaumstoff und Kunststoff umfasst.

## Revendications

1. Silencieux pour un outil à main pneumatique (10) comportant une poignée (12) avec un passage d'échappement (16) pour recevoir l'air d'évacuation, le passage d'échappement comprenant une section principale ayant une surface de paroi, le silencieux comprenant :
(a) un tube interne (30) ayant une extrémité proximale ouverte et une extrémité distale, le tube interne comprenant au moins une ouverture (38) en plus de son extrémité proximale ouverte ;
(b) un tube externe (32) positionné autour du tube interne et comprenant au moins une ouverture de circulation d'air (40), le tube externe étant situé à l'intérieur de la section principale du passage d'échappement et dimensionné de manière à définir une voie de passage entre le tube externe et la surface de paroi de la section principale ;
(c) un élément de blocage (36) situé à proximité de l'extrémité proximale du tube interne ; l'élément de blocage bloquant une partie de la section principale du passage d'échappement de telle sorte que la majeure partie de l'air d'évacuation soit dirigée dans l'extrémité proximale du tube interne lors de l'utilisation ;
(d) un bouchon d'extrémité (44) pouvant être attaché à la poignée pour fermer le passage d'échappement, le bouchon d'extrémité comportant une ouverture de sortie (46) ; et
(e) un certain nombre de séparateurs (56, 80, 82, 84, 92) s'étendant vers l'extérieur à partir du tube interne vers le tube externe ;
dans lequel, lors de l'utilisation, l'air d'évacuation pénètre dans l'extrémité proximale du tube interne (30), s'écoule hors de la au moins une ouverture (38) du tube interne (30), s'écoule hors de la au moins une ouverture de circulation d'air (40) du tube externe (32), passe à travers la voie de passage entre le tube externe (32) et les surfaces de paroi de la section principale, et s'écoule hors de l'ouverture de sortie (46) dans le bouchon d'extrémité (44).

2. Silencieux selon la revendication 1, dans lequel le tube interne (30) est réalisé dans au moins un élément parmi un élastomère dur, un métal, une matière fibreuse et un tissu rigide.

3. Silencieux selon la revendication 1 ou 2, dans lequel la section principale comprend un épaulement supérieur (50), une plaque supérieure (36) étant formée de manière à venir en contact avec l'épaulement supérieur (50) afin d'amener de force l'air d'évacuation dans l'extrémité proximale du tube interne (30) lors de l'utilisation.

4. Silencieux selon l'une quelconque des revendications précédentes, comprenant en outre un certain nombre de rondelles (58) positionnées autour du tube interne.

5. Silencieux selon la revendication 4, dans lequel les rondelles (58) sont réalisées dans une matière choisie dans le groupe comprenant le feutre, la toile, le caoutchouc, la mousse, et une matière synthétique.

6. Silencieux selon l'une quelconque des revendications précédentes, comprenant en outre une pluralité de rondelles (58) positionnés autour du tube interne entre les séparateurs.

7. Silencieux selon l'une quelconque des revendications précédentes, comprenant en outre un second tube interne (76) situé sous le premier tube interne (30) ; le second tube interne (76) ayant une extrémité distale ouverte et une extrémité proximale ; le second tube interne (76) comprenant au moins une ouverture en plus de son extrémité distale ouverte ; l'ouverture de sortie (46) du bouchon d'extrémité (44) étant située de manière adjacente à l'extrémité distale ouverte ; dans lequel, lors de l'utilisation, après que l'air d'évacuation a passé dans la voie de passage entre le tube externe (32) et les surfaces de paroi de la section principale, au moins une partie de l'air d'évacuation s'écoule dans la au moins une ouverture du second tube interne (76), hors de l'extrémité distale ouverte du second tube interne (76), et hors de l'ouverture de sortie (46) du bouchon d'extrémité.

8. Silencieux selon la revendication 7, comprenant en outre un certain nombre de rondelles (58) positionnées autour du second tube interne.

9. Silencieux selon la revendication 8, dans lequel les rondelles (58) sont réalisées dans une matière choisie dans le groupe comprenant le feutre, la toile, le caoutchouc, la mousse, et une matière synthétique.
